# EUROPÄISCHE PATENTSCHRIFT

(11) **EP 2 713 057 B1**
(45) Veröffentlichungstag und Bekanntmachung des Hinweises auf die Patenterteilung: **08.01.2020**
(21) Anmeldenummer: 13182798.2
(22) Anmeldetag: 03.09.2013
(51) Int. Cl.: F04D 25/02, F02C 6/12, F04D 29/42

(54) **RADIALVERDICHTER FÜR EINEN ABGASTURBOLADER**
RADIAL COMPRESSOR FOR AN EXHAUST GAS TURBO CHARGER
COMPRESSEUR RADIAL POUR UNE TURBOSOUFFLANTE DE GAZ D'ÉCHAPPEMENT

(30) Priorität: 26.09.2012 DE 102012217381
(43) Veröffentlichungstag der Anmeldung: 02.04.2014
(73) Patentinhaber: BMTS Technology GmbH & Co. KG, 70376 Stuttgart (DE)
(72) Erfinder: Fiedler, Max, 70806 Kornwestheim (DE); Hanig, Urs, 70469 Stuttgart (DE); Haslinger, Fabian, 68199 Mannheim (DE)
(74) Vertreter: BRP Renaud & Partner mbB Rechtsanwälte Patentanwälte Steuerberater

(56) Entgegenhaltungen:
- EP-A2- 0 982 502
- DE-A1- 10 100 977
- DE-A1- 19 653 217
- DE-A1- 19 723 476
- JP-A- H06 307 250

## Beschreibung

Die vorliegende Erfindung betrifft einen Radialverdichter für einen Abgasturbolader, insbesondere einer Brennkraftmaschine, sowie einen Abgasturbolader mit einem solchen Radialverdichter. Die Erfindung betrifft weiterhin ein Verfahren zum Herstellen eines solchen Radialverdichters.

Abgasturbolader kommen beispielsweise in Brennkraftmaschinen zur Anwendung, um das Druckniveau im Frischgas beim Ladungswechselvorgang zu erhöhen. Ein derartiger Abgasturbolader kann mit einem Radialverdichter ausgestattet sein, der ein Verdichterrad aufweist, mittels welchem das jeweilige Gas gefördert und komprimiert werden kann. Hierfür kann das Verdichterrad eine axiale Eingangsseite und eine radiale Ausgangsseite aufweisen und in einem Verdichterraum angeordnet sein. Ein Einlasskanal führt zur Eingangsseite des Verdichterrads und bei einer Brennkraftmaschine zu einem Niederdruckbereich einer mit dem Abgasturbolader ausgestatteten Frischgasanlage. Ein Auslasskanal führt von der Ausgangsseite des Verdichterrads weg zur Hochdruckseite der Frischgasanlage.

Um eine ungestörte und insbesondere reibungsfreie Rotationsbewegung des Verdichterrads im Betrieb in dem Abgasturbolader sicherzustellen, muss zwischen dem Verdichterrad und einem den Verdichterraum ausbildenden Verdichtergehäuse ein Zwischenraum in der Art eines Spalts bestehen bleiben, so dass Verdichterrad und Verdichtergehäuse beabstandet zueinander angeordnet sind und folglich keine störenden Reibungseffekte zwischen diesen Bauteilen auftreten können. Allerdings führt ein zu stark ausgebildeter Spalt, d.h. eine zu große Spaltweite eines solchen Spalts, zu einer unerwünschten Leistungsschwächung des das Verdichterrad verwendenden Abgasturboladers, da ein solcher Spalt zu einer Reduzierung der Förderleistung des Verdichterrads führt.

Um eine optimale Funktionalität mit einer maximalen Förderleistung des Abgasturboladers sicherzustellen, ist also einerseits der vorangehend erläuterte Spalt zwischen Verdichterrad und Verdichtergehäuse erforderlich, andererseits sollte dieser aber eine möglichst geringe Spaltweite aufweisen.

Die JP H06/307250 A offenbart einen Radialverdichter mit einem Verdichtergehäuse und einem Verdichterrad sowie ein Adapterelement.

Die EP 0 982 502 A2 behandelt einen Radialverdichter mit einer am Verdichtergehäuse vorgesehenen Einlaufschicht.

Die DE 101 00 977 A1 behandelt eine Vorrichtung zum Einstellen des Axialspiels bei einem Radialverdichter.

Die DE 196 53 217 A1 offenbart einen Turbolader für Brennkraftmaschinen. Der Turbolader umfasst ein Verdichtergehäuse und ein Verdichterrad sowie ein Adapterelement.

Es ist eine Aufgabe der vorliegenden Erfindung, eine verbesserte Ausführungsform für einen Radialverdichter anzugeben, der insbesondere hinsichtlich seiner Verdichterleistung optimiert ist. Es ist auch eine Aufgabe der vorliegenden Erfindung, ein Verfahren zum Herstellen eines solchen Radialverdichters anzugeben. Die oben genannten Aufgaben werden gelöst durch den Gegenstand der unabhängigen Patentansprüche. Bevorzugte Ausführungsformen sind Gegenstand der abhängigen Ansprüche.

Die Erfindung beruht auf dem allgemeinen Gedanken, an einem Radialverdichter ein Adapterelement bereitzustellen, welches in der axialen Richtung des Verdichterrads eine Oberflächenkontur aufweist, welche zu der axialen Rad-Oberflächenkontur des Verdichterrads im Wesentlichen komplementär ausgebildet ist. Dieses Adapterelement ist erfindungsgemäß in einen im Bereich des axialen Einlasskanals des Radialverdichters vorgesehenen Befestigungsabschnitt einführbar und in diesem in einer vorbestimmten axialen Fixierungsposition fixierbar. Durch ein Bewegen des Adapterelements im Befestigungsabschnitt entlang der axialen Richtung kann eine Spaltweite eines Spalts zwischen dem Adapterelement und dem Verdichterrad entlang der einander zugewandten Oberflächenkonturen - also der axialen Oberflächenkontur des Adapterelements und der Rad-Oberflächenkontur des Verdichterrads - eingestellt werden. Auf diese Weise lässt sich die Spaltweite durch Bewegen des Adapterelements in eine bestimmte Zielposition minimieren. In dieser sogenannten Fixierungsposition kann das Adapterelement dann auf geeignete Weise endgültig fixiert werden, wobei in der Fixierungsposition die Spaltweite den gewünschten Minimalwert einnimmt, derart, dass sich Verdichterrad und Adapterelement gerade nicht berühren, so dass keine störenden Reibungseffekte bei der Rotation des Verdichterrads auftreten. Mittels des erfindungsgemäßen Radialverdichters lässt sich somit die Spaltweite des Spalts zwischen Verdichterrad und Adapterelement minimieren und folglich die Förderleistung des den Radialverdichter verwendenden Abgasturboladers gegenüber herkömmlichen Radialverdichtern mit nicht-optimierter Spaltweite stark verbessern. Erfindungsgemäß weist der Befestigungsabschnitt ein Innengewinde und das Adapterelement ein dazu komplementäres Außengewinde auf, mittels welchem das Adapterelement relativ zu dem Befestigungsabschnitt in der axialen Richtung bewegbar ist.

In einer bevorzugten Ausführungsform kann das Adapterelement relativ zu dem Verdichtergehäuse in der axialen Fixierungsposition, insbesondere mittels Pressens oder Klebens, fixiert sein. Auf diese Weise lässt sich das Adapterelement in der endgültigen axialen Fixierungsposition, in welcher der Spalt die gewünschte minimale Spaltweite aufweist, fixiert werden, so dass in einem Praxisbetrieb des den erfindungsgemäßen Radialverdichter verwendenden Abgasturboladers ein unerwünschtes Verschieben des Adapterelements und damit verbunden eine unerwünschte Vergrößerung der Spaltweite bzw. ein unerwünschtes Berühren der beiden Oberflächenkonturen vermieden werden kann.

In einer nicht zur Erfindung gehörenden Variante kann der Befestigungsabschnitt mit dem Adapterelement eine Gleitpassung ausbilden, mittels welcher das Adapterelement relativ zu dem Befestigungsabschnitt in der axialen Richtung bewegbar ist.

In einer weiterbildenden Ausführungsform kann das Adapterelement einen zum Befestigungsabschnitt des Verdichtergehäuses komplementären hülsenartigen Adapterelement-Befestigungsabschnitt aufweisen. Dieser geht in der axialen Richtung zu dem Verdichterrad hin in einen axialen Verlängerungsabschnitt über, an welchem die zu der axialen Rad-Oberflächenkontur des Verdichterrads komplementäre Oberflächenkontur angeordnet ist. Ein solcher Verlängerungsabschnitt kann integral am Adapterelement ausgebildet sein, so dass auch der Adapterelement-Befestigungsabschnitt mit dem Verlängerungsabschnitt eine Einheit ausbildet. Alternativ dazu kann aber der Adapterelement-Befestigungsabschnitt auch als ein separates Bauteil ausgebildet sein, welches mittels Pressen oder Kleben an dem Befestigungsabschnitt des Adapterelements befestigt sein kann.

In einer besonders bevorzugten Ausführungsform kann das Adapterelement oder zumindest der axiale Verlängerungsabschnitt aus einem Kunststoff-Material hergestellt sein. Alternativ dazu kann das Adapterelement auch aus einem anderen Material hergestellt sein und zumindest im Bereich des axialen Verlängerungsabschnitts mit einem Kunststoff beschichtet sein. In einer weiteren Alternative kann das Adapterelement als ein mit Kunststoff umspritztes Hybrid-Bauteil ausgebildet sein.

Die Verwendung eines Kunststoff-Materials bietet sich insbesondere dann an, wenn das Adapterelement in der axialen Richtung zu der endgültigen Fixierungsposition hin bewegt wird, während das Verdichterrad rotiert. In diesem Fall wirkt das Verdichterrad, insbesondere dessen Schaufeln, in der Art einer "Fräse". Dies bedeutet, dass das Adapterelement so weit auf das Verdichterrad zu bewegt werden kann, bis sich die Oberflächenkonturen von Verdichterrad und Adapterelement berühren. Im Falle eines sich drehenden Verdichterrads wird dann der aus dem Kunststoff-Material hergestellte Verlängerungsabschnitt des Adapterelements quasi "abgefräst", was zur erwünschten Minimierung der Spaltweite des Spalts führt. Auch ergibt sich dadurch eine optimale Formadaption, die aller FormToleranzen des Verdichterrads eliminiert.

Ein weiterer Vorteil der Verwendung von Kunststoff-Material besteht darin, dass es sich bei Kunststoff um ein relativ "weiches" Material handelt, so dass eine unerwünschte Deformation des Verdichterrads, wenn dieses rotiert und mit dem Adapterelement in Kontakt gebracht wird, weitgehend ausgeschlossen werden kann. Selbstverständlich kann für das Adapterelement auch ein Kunststoff-Material verwendet werden, wenn das Verdichterrad beim Einführen des Adapterelements in den Befestigungsabschnitt nicht rotiert.

Für den Fall, dass der axiale Verlängerungsabschnitt als separates Bauteil ausgeführt ist, welcher erst an dem Adapterelement montiert werden muss, kann am Adapterelement ein geeignetes Dichtungselement (beispielsweise in der Art eines O-Rings o.ä.) vorgesehen sein, welches den axialen Verlängerungsabschnitt gegen das eigentliche Adapterelement abdichtet.

In einer besonders bevorzugten Ausführungsform kann daran gedacht sein, dass zwischen dem Verdichtergehäuse und dem Adapterelement eine Dichtungseinrichtung zur Abdichtung des Adapterelements gegen das Verdichtergehäuse angeordnet ist. Auf diese Weise kann ein unerwünschter Luftstrom zwischen Einlass- und Auslassseite durch den - idealerweise minimierten - Spalt zwischen dem Adapterelement und dem Verdichterrad vermieden werden. In einer weiterbildenden Ausführungsform, die technisch besonders einfach zu realisieren ist, kann eine solche Dichtungseinrichtung in der Art eines Dichtungsring oder, alternativ dazu, als flüssige Dichtung ausgebildet sein.

Die Erfindung betrifft auch einen Abgasturbolader mit einem Radialverdichter mit einem oder mehreren der vorhergehend genannten Merkmale, wobei der Abgasturbolader ein mit dem Verdichterrad des Radialverdichters mittels einer Läuferwelle drehfest verbundenes Turbinenrad aufweist.

Die Erfindung betrifft ferner ein Verfahren zum Herstellen des vorangehend erläuterten Radialverdichters. Gemäß diesem Verfahren wird in einem ersten Schritt a) ein einen axialen Einlasskanal und einen radialen Auslasskanal aufweisendes Verdichtergehäuse bereitgestellt. Das Verdichtergehäuse umgibt einen Verdichterraum wenigstens teilweise. In dem Verdichterraum ist ein Verdichterrad zum Fördern und Komprimieren eines Gases angeordnet, wobei das Verdichterrad eine dem Einlasskanal zugewandte axiale Eingangsseite, eine dem Auslasskanal zugewandte radiale Ausgangsseite und eine axiale Rad-Oberflächenkontur aufweist, die sich von der Eingangsseite bis zur Ausgangsseite erstreckt.

In einem zweiten Schritt b) wird ein im Wesentlichen hülsenartig ausgebildetes Adapterelement bereitgestellt, welches in einen am Verdichtergehäuse im Bereich des axialen Einlasskanals vorgesehenen Befestigungsabschnitt axial einführbar ist. Dieses Adapterelement ist in einer vorbestimmten axialen Fixierungsposition in dem Befestigungsabschnitt fixierbar.

In einem dritten Schritt c) wird das Adapterelement axial in den Befestigungsabschnitt bis zur axialen Fixierungsposition eingeführt, in welcher die Oberflächenkontur des Adapterelements wenigstens teilweise an der axialen Rad-Oberflächenkontur des Verdichterrads anliegt.

In einem abschließenden, vierten Schritt d) wird das Adapterelement am Verdichtergehäuse axial fixiert.

Das Einbringen des Adapterelements gemäß Schritt c) kann entweder bei rotierendem oder bei ruhendem Verdichterrad erfolgen.

Durch das axiale Einführen des Adapterelements gemäß Schritt c) kann zunächst eine Spaltweite des Spaltes zwischen den beiden zueinander komplementären Oberflächenkonturen von Adapterelement und Verdichterrad minimiert werden. Dies kann so weit gehen, dass die beiden Oberflächenkonturen von Adapterelement und Verdichterrad in Kontakt miteinander gebracht werden. Ein derartiges Minimieren der Spaltweite bzw. kann bei rotierendem Verdichterrad erfolgen: in diesem Fall verrichtet das Verdichterrad spanende Arbeit am Adapterelement. Dies bedeutet, dass die Oberflächenkontur des Adapterelements durch die Rotation des Verdichterrads, welches in der Art einer Fräse wirkt, an die Oberflächenkontur des Verdichterrads angepasst wird, so dass im Idealfall kein unerwünschter Spalt zwischen Verdichterrad und Verdichtergehäuse mehr vorhanden ist oder ein solcher Spalt eine minimale Spaltweite aufweist.

Alternativ dazu kann das Einbringen des Adapterelements gemäß Schritt c) aber auch bei ruhendem Verdichterrad erfolgen. In diesem Fall kann das Adapterelement in dem anschließenden Schritt d) endgültig, beispielsweise mittels Kleben oder Pressen, im Verdichtergehäuse fixiert werden, und erst danach das Verdichterrad in Rotation versetzt werden. Auch in diesem Fall arbeitet das Verdichterrad in der Art einer Fräse und optimiert somit die Oberflächenkontur des Adapterelements derart, dass die Spaltweite des Spalts zwischen Verdichterrad und Verdichtergehäuse minimal wird.

Mittels des erfindungsgemäßen Verfahrens lässt sich also ein minimaler Konturspalt (sog. "Nullspalt") erzeugen, so dass die Oberflächenkontur des Adapterelements quasi berührungsfrei an der dazu komplementären Oberflächenstruktur des Verdichterrads "anliegt", so dass die Rotation des Verdichterrads ohne störende Reibungseffekte zwischen dem Adapterelement und dem Verdichterrad erfolgen kann.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

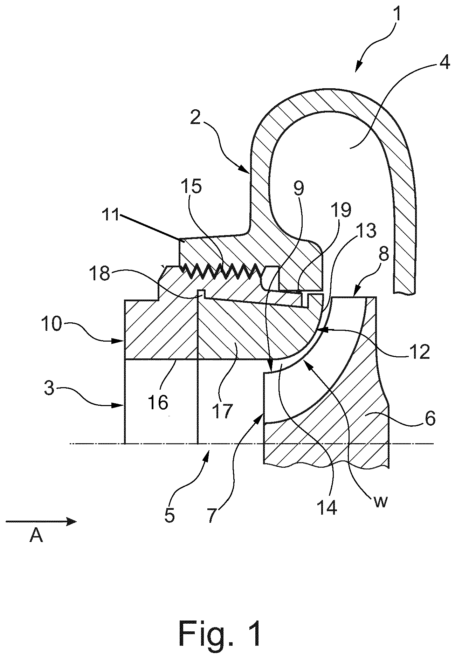

In der Figur 1 ist ein erfindungsgemäßer Radialverdichter für einen Abgasturbolader dargestellt und mit 1 bezeichnet. Der Radialverdichter 1 umfasst ein Verdichtergehäuse 2, welches einen axialen Einlasskanal 3 und einen radialen Auslasskanal 4 aufweist. Das Verdichtergehäuse 2 umgibt teilweise einen Verdichterraum 5. In dem Verdichterraum 5 ist ein Verdichterrad 6 zum Fördern und Komprimieren eines Gases angeordnet. Das Verdichterrad 6 weist eine dem Einlasskanal 3 zugewandte axiale Eingangsseite 7 und eine dem Auslasskanal 4 zugewandte radiale Ausgangsseite 8 auf. Von der Eingangsseite 7 zur Ausgangsseite 8 erstreckt sich eine axiale Rad-Oberflächenkontur 9.

Der Radialverdichter 1 umfasst des Weiteren ein im Wesentlichen hülsenartiges ausgebildetes Adapterelement 10. Das Adapterelement 10 ist in einen am Verdichtergehäuse 2 im Bereich des axialen Einlasskanals 3 vorgesehenen Befestigungsabschnitt 11 in eine axiale Richtung A einführbar. Das Adapterelement 10 weist an einer ersten Stirnseite 12, die dem Verdichterrad 6 zugewandt ist, eine Oberflächenkontur 13 auf, welche zu der axialen Rad-Oberflächenkontur 9 im Wesentlichen komplementär ausgebildet ist.

Durch ein axiales Bewegen des Adapterelements 10 in der axialen Richtung A im Befestigungsabschnitt 11 des Verdichtergehäuses 2 (in einem nicht-fixierten Zustand des Adapterelements 10) kann eine Spaltweite w eines axial zwischen dem Adapterelement 10 und dem Verdichterrad 6 entlang der einander zugewandten Oberflächenkonturen 9, 13 ausgebildeten Durchgangsspalt 14 eingestellt werden. Ein solches Einstellen kann dabei derart erfolgen, dass die Spaltweite w möglichst klein wird. Dazu wird das Adapterelement 10 in eine axiale Fixierungsposition bewegt, in welcher sich die beiden Oberflächenkonturen 9, 13 berühren. Auf diese Weise wird die Ausbildung eines unerwünschten Durchgangsspalts 14 zwischen den beiden Oberflächenkonturen 9, 13 nahezu vollständig vermieden.
In der axialen Fixierungsposition kann das Adapterelement 10 beispielsweise mittels Kleben oder Pressen oder einer anderen geeigneten Befestigungsmethode endgültig fixiert werden. Vor dem endgültigen Fixieren kann das Verdichterrad 6 in Rotation versetzt werden und somit auf die Oberflächenkontur 13 des Adapterelements 10 spanend wirken. Somit wird sichergestellt, dass das Verdichterrad 6 im Praxisbetrieb der Leitschaufel-Anordnung 1 reibungsfrei rotieren kann. Durch die endgültige Fixierung des Adapterelements 10 wird verhindert, dass dieses in einem Praxisbetrieb des den erfindungsgemäßen Radialverdichter 1 verwendenden Abgasturboladers auf unerwünschte Weise in dem Befestigungsabschnitt 11 bewegt werden kann, so dass sich unter Umständen wieder ein störender Durchgangsspalt 14 mit einer unerwünscht großen Spaltweite w ausgebildet werden kann.

Das Einführen und Bewegen des Adapterelements 10 in den Befestigungsabschnitt 11 kann grundsätzlich bei ruhendem oder rotierendem Verdichterrad 6 erfolgen. In letzterem Fall wirkt das Verdichterrad 6 spanend auf die Oberflächenkontur 13 des Adapterelements 10, wenn dieses auf die Rad-Oberflächenkontur 9 des Verdichterrads 6 trifft. Alternativ dazu kann aber, wie bereits erläutert, das Adapterelement 10 bei ruhendem Verdichterrad 6 auf dieses zu bewegt werden, in einem anschließenden Schritt in der endgültigen Fixierungsposition, in welcher die beiden Oberflächenkonturen 9, 13 aneinander anliegen, beispielsweise mittels Kleben oder Pressen (oder einer anderen geeigneten Befestigungsmethode) in der Axialfixierungsposition endgültig fixiert werden und anschließend das Verdichterrad 6 in Rotation versetzt werden. In diesem Fall muss jedoch sichergestellt sein, dass der Anpressdruck der Oberflächenkontur 13 auf das Verdichterrad 6 nicht so stark ist, dass eine Rotation des Verdichterrads 6 nicht mehr möglich ist.

Der Befestigungsabschnitt 11 des Verdichtergehäuses 2 weist ein Innengewinde auf, und das Adapterelement 10 weist ein dazu komplementäres Außengewinde auf, mittels welchem das Adapterelement 10 relativ zu dem Befestigungsabschnitt 11 in der axialen Richtung A bewegbar ist. Ein solches Innen- bzw. Außengewinde ist in der Figur 1 grobschematisch angedeutet und mit dem Bezugszeichen 15 versehen.

In einer dazu alternativen, nicht zur Erfindung gehörigen Variante kann der Befestigungsabschnitt 11 des Verdichtergehäuses 2 mit dem Adapterelement 10 auch eine Gleitpassung ausbilden. Mittels einer solchen Gleitpassung (in der Figur 1 nicht gezeigt), lässt sich das Adapterelement 10 ebenfalls relativ zu dem Befestigungsabschnitt 11 in der axialen Richtung A bewegen.

Das Adapterelement 10 kann einteilig, oder, wie in der Figur 1 gezeigt, auch zweiteilig ausgebildet sein. In diesem Fall kann das Adapterelement 10 einen zu dem Befestigungsabschnitt 11 des Verdichtergehäuses 2 komplementären, hülsenartigen Adapterelement-Befestigungsabschnitt 16 umfassen, welcher in der axialen Richtung A zum Verdichterrad 2 hin in einen axialen Verlängerungsabschnitt 17 übergeht, an welchem die zu der axialen Rad-Oberflächenkontur 9 des Verdichterrads 6 komplementäre Oberflächenkontur 13 angeordnet ist.

Der axiale Verlängerungsabschnitt 17 kann beispielsweise mittels Verkleben an dem Adapterelement-Befestigungsabschnitt 16 befestigt sein. Zwischen den beiden Bauteilen kann ein Dichtungselement 18 vorgesehen sein. Das gesamte Adapterelement 10 oder zumindest der axiale Verlängerungsabschnitt 17 können aus einem Kunststoff-Material hergestellt sein, welches, wie vorangehend erläutert, beim Einführen in den Befestigungsabschnitt 11 des Verdichtergehäuses 12 bei rotierendem Verdichterrad 6 von dessen Oberflächenkontur 9 auf einfache Weise "zerspant" werden kann.

Alternativ ist auch vorstellbar, dass in einer Variante das Adapterelement 10 als Einheit ausgebildet und mit einem Kunststoff-Material, vollständig oder teilweise, beschichtet ist.

Zwischen dem Verdichtergehäuse 2 und dem Adapterelement 10 kann eine Dichtungseinrichtung 19 zur Abdichtung des Adapterelements 10 gegen das Verdichtergehäuse 2 angeordnet sein. Diese Dichtungseinrichtung 19 kann in der Art eines Dichtungsrings, oder, alternativ dazu, auch als flüssige Dichtung ausgebildet sein.

Der Radialverdichter 1 kann Teil eines in der Figur 1 nicht gezeigten Abgasturboladers sein. Ein solcher Abgasturbolader kann ein mit dem Verdichterrads 6 des Radialverdichters 1 mittels einer Läuferwelle drehfest verbundenes Turbinenrad aufweisen.

## Patentansprüche

1. Radialverdichter (1) für einen Abgasturbolader, insbesondere einer Brennkraftmaschine,
- mit einem einen axialen Einlasskanal (3) und einen radialen Auslasskanal (4) aufweisenden Verdichtergehäuse (2), welches einen Verdichterraum (5) wenigstens teilweise umgibt,
- mit einem in dem Verdichterraum (5) angeordneten Verdichterrad (6) zum Fördern und Komprimieren eines Gases, wobei das Verdichterrad (6) eine dem Einlasskanal (3) zugewandte axiale Eingangsseite (7), eine dem Auslasskanal (4) zugewandte radiale Ausgangsseite (8) und eine axiale Rad-Oberflächenkontur (9) aufweist, die sich von der Eingangsseite (6) bis zur Ausgangsseite (7) erstreckt,
- mit einem im Wesentlichen hülsenartig ausgebildeten Adapterelement (10), welches in einen am Verdichtergehäuse (2) im Bereich des axialen Einlasskanals (3) vorgesehenen Befestigungsabschnitt (11) axial einführbar und in einer vorbestimmten axialen Fixierungsposition fixierbar oder fixiert ist,
- wobei das Adapterelement (10) an einer ersten axialen Stirnseite (12), welche in der axialen Fixierungsposition dem Verdichterrad (6) zugewandt ist, wenigstens abschnittsweise eine Oberflächenkontur (13) aufweist, welche zu der axialen Rad-Oberflächenkontur (9) im Wesentlichen komplementär ausgebildet ist, so dass durch ein axiales Bewegen des Adapterelements (10) im Befestigungsabschnitt (11) in einem nicht-fixierten Zustand des Adapterelements (10) eine Spaltweite (w) eines axial zwischen dem Adapterelement (10) und dem Verdichterrad (6) entlang der einander zugewandten Oberflächenkonturen (9, 13) ausgebildeten Durchgangsspalts (14) einstellbar ist,
**dadurch gekennzeichnet, dass**
der Befestigungsabschnitt (11) ein Innengewinde und das Adapterelement (10) ein dazu komplementäres Außengewinde aufweist, mittels welchen das Adapterelement (10) relativ zu dem Befestigungsabschnitt (11) in der axialen Richtung (A) bewegbar ist.

2. Radialverdichter (1) nach Anspruch 1,
**dadurch gekennzeichnet, dass**
das Adapterelement (10) relativ zu dem Verdichtergehäuse (2) in der axialen Fixierungsposition mittels Pressen oder Kleben fixiert ist.

3. Radialverdichter (1) nach einem der vorhergehenden Ansprüche,
**dadurch gekennzeichnet, dass**
das Adapterelement (10) einen zu dem Befestigungsabschnitt (11) des Verdichtergehäuses (2) komplementären hülsenartigen Adapterelement-Befestigungsabschnitt (16) aufweist, welcher in der axialen Richtung (A) zu dem Verdichterrad (6) hin in einen axialen Verlängerungsabschnitt (17) übergeht, an welchem die zu der axialen Rad-Oberflächenkontur (9) des Verdichterrads (6) komplementäre Oberflächenkontur (13) angeordnet ist.

4. Radialverdichter (1) nach einem der vorhergehenden Ansprüche,
**dadurch gekennzeichnet, dass**
das Adapterelement (10) oder zumindest der axiale Verlängerungsabschnitt (17) aus einem Kunststoff-Material hergestellt ist.

5. Radialverdichter (1) nach einem der vorhergehenden Ansprüche,
**dadurch gekennzeichnet, dass**
zwischen dem Verdichtergehäuse (2) und dem Adapterelement (10) eine Dichtungseinrichtung (19) zur Abdichtung des Adapterelements (10) gegen das Verdichtergehäuse (2) angeordnet ist.

6. Radialverdichter (1) nach Anspruch 5, **dadurch gekennzeichnet, dass**
die Dichtungseinrichtung (19) in der Art eines Dichtungsrings oder als flüssige Dichtung ausgebildet ist.

7. Abgasturbolader,
- mit einem Radialverdichter (1) nach einem der vorhergehenden Ansprüche,
- mit einem mit dem Verdichterrad (6) mittels einer Läuferwelle drehfest verbundenen Turbinenrad.

8. Verfahren zum Herstellen eines Radialverdichters (1), umfassend die folgenden Schritte:
a) Bereitstellen eines einen axialen Einlasskanal (3) und einen radialen Auslasskanal (4) aufweisenden Verdichtergehäuses (2), welches einen Verdichterraum (5) wenigstens teilweise umgibt, sowie eines in dem Verdichterraum (5) angeordneten Verdichterrads (6) zum Fördern und Komprimieren eines Gases, wobei das Verdichterrad (6) eine dem Einlasskanal (3) zugewandte axiale Eingangsseite (7), eine radiale dem Auslasskanal (4) zugewandte Ausgangsseite (8) und eine axiale Rad-Oberflächenkontur (9) aufweist, die sich von der Eingangsseite (7) bis zur Ausgangsseite (8) erstreckt,
b) Bereitstellen eines im Wesentlichen hülsenartig ausgebildeten Adapterelements (10), welches in einen am Verdichtergehäuse (2) im Bereich des axialen Einlasskanals (3) vorgesehenen Befestigungsabschnitt (11) axial einführbar und in einer vorbestimmten axialen Fixierungsposition fixierbar ist,
wobei das Adapterelement (10) an einer ersten axialen Stirnseite (12), welche in der axialen Fixierungsposition dem Verdichterrad (6) zugewandt ist, wenigstens abschnittsweise eine Oberflächenkontur (13) aufweist, welche zu der axialen Rad-Oberflächenkontur (9) im Wesentlichen komplementär ausgebildet ist, so dass durch ein axiales Bewegen des Adapterelements (10) im Befestigungsabschnitt (11) in einem nicht-fixierten Zustand des Adapterelements (10) eine Spaltweite (w) eines axial zwischen dem Adapterelement (10) und dem Verdichterrad (6) entlang der einander zugewandten Oberflächenkonturen (9, 13) ausgebildeten Durchgangsspalts (14) einstellbar ist, und
wobei der Befestigungsabschnitt (11) ein Innengewinde und das Adapterelement (10) ein dazu komplementäres Außengewinde aufweist, mittels welchen das Adapterelement (10) relativ zu dem Befestigungsabschnitt (11) in der axialen Richtung (A) bewegbar ist,
c) Axiales Einführen des Adapterelements (10) in den Befestigungsabschnitt (11) bis zu der axialen Fixierungsposition, in welcher die Oberflächenkontur (13) des Adapterelements wenigstens teilweise an der axialen Rad-Oberflächenkontur (9) des Verdichterrads (6) anliegt,
d) Axiales Fixieren des Adapterelements (10) an dem Verdichtergehäuse (2).

9. Verfahren nach Anspruch 8,
**dadurch gekennzeichnet, dass**
das Einbringen des Adapterelements (10) gemäß Schritt c) bei rotierendem Verdichterrad (6) erfolgt.

10. Verfahren nach Anspruch 8,
**dadurch gekennzeichnet, dass**
das Einbringen des Adapterelements (10) gemäß Schritt c) bei ruhendem Verdichterrad (6) erfolgt.

## Claims

1. Radial compressor (1) for an exhaust gas turbo charge, in particular of an internal combustion engine
- having a compressor housing (2) having an axial inlet channel (3) and a radial outlet channel (4), which compressor housing at least partially surrounds a compressor chamber (5),
- having a compressor wheel (6) disposed in the compressor chamber (5) for conveying and compressing a gas, wherein the compressor wheel (6) has an axial inlet side (7) facing the inlet channel (3), a radial outlet side (8) facing the outlet channel (4) and an axial wheel surface contour (9) which extends from the inlet side (6) to the outlet side (7),
- having a substantially sheath-like formed adapter element (10) which can be inserted axially into a fastening portion (11) provided on the compressor housing (2) in the region of the axial inlet channel (3) and can be fixed or is fixed in a predetermined axial fixing position,
- wherein the adapter element (10) on a first axial end face (12), which in the axial fixing position faces the compressor wheel (6), has at least sectionally a surface contour (13) which is formed substantially complementarily to the axial wheel surface contour (9) such that, by means of an axial moving of the adapter element (10) in the fastening portion (11) in a non-fixed state of the adapter element (10), a gap width (w) of a through gap (14) formed axially between the adapter element (10) and the compressor wheel (6) along the surface contours (9, 13) facing one another can be set,
**characterised in that**
the fastening portion (11) has an inner threading and the adapter element (10) has an outer threading complementary thereto, by means of which threadings the adapter element (10) is movable in relation to the fastening portion (11) in the axial direction (A).

2. Radial compressor (1) according to claim 1,
**characterised in that**
the adapter element (10) is fixed in the axial fixing position relatively to the compressor housing (2) by means of pressing or adhesive bonding.

3. Radial compressor (1) according to any of the preceding claims,
**characterised in that**
the adapter element (10) has a sheath-like adapter element fastening portion (16) complementary to the fastening portion (11) of the compressor housing (2), which adapter element fastening portion transitions in the axial direction (A) towards the compressor wheel (6) into an axial extension portion (17) on which is disposed the surface contour (13) complementary to the axial wheel surface contour (9) of the compressor wheel (6).

4. Radial compressor (1) according to any of the preceding claims,
**characterised in that**
the adapter element (10) or at least the axial extension portion (17) is manufactured from a synthetic material.

5. Radial compressor (1) according to any of the preceding claims,
**characterised in that**
between the compressor housing (2) and the adapter element (10) is disposed a sealing apparatus (19) for sealing the adapter element (10) against the compressor housing (2).

6. Radial compressor (1) according to claim 5,
**characterised in that**
the sealing apparatus (19) is formed in the manner of a sealing ring or as a fluid seal.

7. Exhaust gas turbocharger,
- having a radial compressor (1) according to any of the preceding claims,
- having a turbine wheel non-rotationally connected with the compressor wheel (6) by means of a rotor shaft.

8. Method for producing a radial compressor (1),
comprising the following steps:
a) provision of a compressor housing (2) having an axial inlet channel (3) and a radial outlet channel (4), which compressor housing at least partially surrounds a compressor chamber (5), and of a compressor wheel (6), disposed in the compressor chamber (5), for conveying and compressing a gas, wherein the compressor wheel (6) has an axial inlet side (7) facing the inlet channel (3), a radial outlet side (8) facing the outlet channel (4) and an axial wheel surface contour (9) which extends from the inlet side (7) to the outlet side (8),
b) provision of a substantially sheath-like formed adapter element (10) which can be axially introduced into a fastening portion (11) provided on the compressor housing (2) in the region of the axial inlet channel (3) and which can be fixed in a predetermined axial fixing position,
wherein the adapter element (10) on a first axial end face (12), which, in the axial fixing position, faces the compressor wheel (6), has at least portionally a surface contour (13) which is formed substantially complementarily to the axial wheel surface contour (9), such that, by means of an axial moving of the adapter element (10) in the fastening portion (11) in a non-fixed state of the adapter element (10), a gap width (w) of a through gap (14) formed axially between the adapter element (10) and the compressor wheel (6) along the surface contours (9, 13) facing one another can be set, and
wherein the fastening portion (11) has an inner threading and the adapter element (10) has an outer threading complementary thereto, by means of which threadings the adapter element (10) is movable in relation to the fastening portion (11) in the axial direction (A),
c) axial introduction of the adapter element (10) into the fastening portion (11) up until the axial fixing position, in which the surface contour (13) of the adapter element abuts at least partially on the axial wheel surface contour (9) of the compressor wheel (6),
d) axial fixing of the adapter element (10) on the compressor housing (2).

9. Method according to claim 8,
**characterised in that**
the introduction of the adapter element (10) is carried out according to step c) when the compressor wheel (6) is rotating.

10. Method according to claim 8,
**characterised in that**
the introduction of the adapter element (10) is carried out according to step c) when the compressor wheel (6) is stationary.

## Revendications

1. Compresseur radial (1) pour une turbosoufflante de gaz d'échappement, en particulier d'un moteur à combustion interne
- avec un boîtier de compresseur (2) présentant un canal d'entrée axial (3) et un canal de sortie radial (4), lequel entoure au moins en partie un espace de compresseur (5),
- avec une roue de compresseur (6) agencée dans l'espace de compresseur (5) pour transporter et comprimer un gaz, dans lequel la roue de compresseur (6) présente un côté entrée axial (7) tourné vers le canal d'entrée (3), un côté sortie radial (8) tourné vers le canal de sortie(4) et un contour de surface de roue axial (9), qui s'étend du côté entrée (6) jusqu'au côté sortie (7),
- avec un élément adaptateur (10) réalisé sensiblement en forme de douille, lequel peut être introduit axialement dans une section de fixation (11) prévue au niveau du boîtier de compresseur (2) dans la zone du canal d'entrée axial (3) et peut être fixé ou est fixé dans une position de fixation axiale prédéterminée,
- dans lequel l'élément adaptateur (10) présente au niveau d'un premier côté frontal axial (12), lequel est tourné vers la roue de compresseur (6) dans la position de fixation axiale, au moins par section un contour de surface (13), lequel est réalisé de manière sensiblement complémentaire au contour de surface de roue axial (9), de sorte qu'une largeur de fente (w) d'une fente traversante (14) réalisée axialement entre l'élément adaptateur (10) et la roue de compresseur (6) le long des contours de surface (9, 13) tournés l'un vers l'autre est réglable par un déplacement axial de l'élément adaptateur (10) dans la section de fixation (11) dans un état non fixé de l'élément adaptateur (10),
**caractérisé en ce que**
la section de fixation (11) présente un filetage intérieur et l'élément adaptateur (10) présente un filetage extérieur complémentaire à celui-ci, au moyen desquels l'élément adaptateur (10) est déplaçable par rapport à la section de fixation (11) dans la direction axiale (A).

2. Compresseur radial (1) selon la revendication 1,
**caractérisé en ce que**
l'élément adaptateur (10) est fixé par rapport au boîtier de compresseur (2) dans la position de fixation axiale par pression ou collage.

3. Compresseur radial (1) selon l'une quelconque des revendications précédentes,
**caractérisé en ce que**
l'élément adaptateur (10) présente une section de fixation d'élément adaptateur (16) en forme de douille complémentaire à la section de fixation (11) du boîtier de compresseur (2), lequel passe dans la direction axiale (A) à la roue de compresseur (6) dans une section de prolongement axiale (17), au niveau de laquelle le contour de surface (13) complémentaire au contour de surface de roue axial (9) de la roue de compresseur (6).

4. Compresseur radial (1) selon l'une quelconque des revendications précédentes,
**caractérisé en ce que**
l'élément adaptateur (10) ou au moins la section de prolongement axiale (17) est fabriqué en un matériau plastique.

5. Compresseur radial (1) selon l'une quelconque des revendications précédentes,
**caractérisé en ce que**
un dispositif d'étanchéité (19) pour l'étanchéité de l'élément adaptateur (10) contre le boîtier de compresseur (2) est agencé entre le boîtier de compresseur (2) et l'élément adaptateur (10).

6. Compresseur radial (1) selon la revendication 5,
**caractérisé en ce que**
le dispositif d'étanchéité (19) est réalisé à la manière d'une bague d'étanchéité ou en tant que joint d'étanchéité fluide.

7. Turbosoufflante de gaz d'échappement,
- avec un compresseur radial (1) selon l'une quelconque des revendications précédentes,
- avec une roue de turbine reliée solidaire en rotation avec la roue de compresseur (6) au moyen d'un arbre de rotor.

8. Procédé de fabrication d'un compresseur radial (1), comprenant les étapes suivantes :
a) mise à disposition d'un boîtier de compression (2) présentant un canal d'entrée axial (3) et un canal de sortie radial (4), lequel entoure au moins en partie un espace de compresseur (5), ainsi que d'une roue de compresseur (6) agencée dans l'espace de compresseur (5) pour transporter et comprimer un gaz, dans lequel la roue de compresseur (6) présente un côté entrée axial (7) tourné vers le canal d'entrée (3), un côté sortie (8) radial tourné vers le canal de sortie (4) et un contour de surface de roue axial (9), qui s'étend du côté entrée (7) jusqu'au côté sortie (8),
b) mise à disposition d'un élément adaptateur (10) réalisé sensiblement en forme de douille, lequel peut être introduit axialement dans une section de fixation (11) prévue au niveau du boîtier de compresseur (2) dans la zone du canal d'entrée axial (3) et peut être fixé ou est fixé dans une position de fixation axiale prédéterminée,
dans lequel l'élément adaptateur (10) présente au niveau d'un premier côté frontal axial (12), lequel est tourné vers la roue de compresseur (6) dans la position de fixation axiale, au moins par section un contour de surface (13), lequel est réalisé de manière sensiblement complémentaire au contour de surface de roue axial (9), de sorte qu'une largeur de fente (w) d'une fente traversante (14) réalisée axialement entre l'élément adaptateur (10) et la roue de compresseur (6) le long des contours de surface (9, 13) tournés l'un vers l'autre est réglable par un déplacement axial de l'élément adaptateur (10) dans la section de fixation (11) dans un état non fixé de l'élément adaptateur (10), et
dans lequel la section de fixation (11) présente un filetage intérieur et l'élément adaptateur (10) présente un filetage extérieur complémentaire à celui-ci, au moyen desquels l'élément adaptateur (10) est déplaçable par rapport à la section de fixation (11) dans la direction axiale (A),
c) introduction axiale de l'élément adaptateur (10) dans la section de fixation (11) jusqu'à la position de fixation axiale, dans laquelle le contour de surface (13) de l'élément adaptateur s'appuie au moins en partie sur le contour de surface de roue axial (9) de la roue de compresseur (6),
d) fixation axiale de l'élément adaptateur (10) au boîtier de compresseur (2).

9. Procédé selon la revendication 8,
**caractérisé en ce que**
l'introduction de l'élément adaptateur (10) selon l'étape c) a lieu lorsque la roue de compresseur (6) est en rotation.

10. Procédé selon la revendication 8,
**caractérisé en ce que**
l'introduction de l'élément adaptateur (10) selon l'étape c) a lieu lorsque la roue de compresseur (6) est au repos.
